# EUROPEAN PATENT APPLICATION

(11) **EP 4 779 989 A1**
(43) Date of publication of application: **22.07.2026**
(21) Application number: 25305070.2
(22) Date of filing: 20.01.2025
(51) Int. Cl.: H04N 21/234, H04N 21/44, H04N 21/81, H04N 21/854

(54) **BLENDSHAPES RESCALING SIGNALING IN MPEG AVATAR REPRESENTATION FORMAT**

(71) Applicant: InterDigital CE Patent Holdings, SAS, 75017 Paris (FR)
(72) Inventor: GOSSELIN, Philippe Henri, 35235 THORIGNE-FOUILLARD (FR); GUILLOTEL, Philippe, 35770 VERN SUR SEICHE (FR); LE CLERC, Francois, 35590 L'HERMITAGE (FR); AVRIL, Quentin, 35830 BETTON (FR); COVA REGATEIRO, João Pedro, 35220 CHATEAUBOURG (FR)
(74) Representative: Vossius & Partner Patentanwälte Rechtsanwälte mbB

(57) **Abstract**

Some embodiments of a method may include: obtaining a set of blendshape weights; determining a streaming format is supported; determining rescaling of one or more of the set of blendshape weights is to be done for the streaming format; rescaling one or more of the blendshape weights in the set of blendshape weights for the streaming format; and animating an avatar using the rescaled set of blendshape weights.

## Description

### INCORPORATION BY REFERENCE

The present application incorporates by reference in their entirety the following applications: European Patent Application Serial No. EP25305060, entitled "INDEXING SIGNALING IN MPEG AVATAR REPRESENTATION FORMAT" and filed January 17, 2025 ("'060 application"); European Patent Application Serial No. EP25305036, entitled "CONTROLLERS SIGNALING IN MPEG AVATAR REPRESENTATION FORMAT" and filed January 14, 2025 ("'036 application"); European Patent Application Serial No. EP23305405, entitled "Avatar signaling on MPEG-I Scene Description" and filed March 24, 2023 ("'405 application"); International Patent Application Serial No. PCT/EP2024/057092, entitled "Avatar Signaling on MPEG-I Scene Description" and filed March 15, 2024 ("'092 application"); European Patent Application Serial No. EP23306167, entitled "Controllers on MPEG-I Scene Description" and filed July 10, 2023 ("'167 application"); International Patent Application Serial No. PCT/EP2024/068034, entitled "Controllers on MPEG-I Scene Description" and filed June 26, 2024 ("'034 application"); European Patent Application Serial No. EP24305094, entitled "Avatar JSON Interchange File Format" and filed January 15, 2024 ("'094 application"); International Patent Application Serial No. PCT/EP2024/078214, entitled "Avatar JSON Interchange File Format" and filed October 8, 2024 ("'214 application"); European Patent Application Serial No. EP24305458, entitled "Avatars Controllers in Scene Descriptions" and filed March 27, 2024 ("'458 application"); and European Patent Application Serial No. EP24306850, entitled "Controllers in MPEG Avatar Representation Format" and filed November 1, 2024 ("'850 application").

### BACKGROUND

The present application is related to avatars.

### SUMMARY

An example method in accordance with some embodiments may include: obtaining a set of blendshape weights; determining a streaming format is supported; determining rescaling of one or more of the set of blendshape weights is to be done for the streaming format; rescaling one or more of the blendshape weights in the set of blendshape weights for the streaming format; and animating an avatar using the rescaled set of blendshape weights.

Some embodiments of the example method may further include: obtaining a blendshape set object; parsing the blendshape set object; parsing a name property of the blendshape set object; parsing a description property of the blendshape set object; parsing a purpose property of the blendshape set object; parsing a shapes property of the blendshape set object; parsing a basisMesh property of the blendshape set object; and parsing a scaling property of the blendshape set object.

For some embodiments of the example method, the scaling property maps one or more streaming formats to a respective set from one or more sets of rescaling weights.

For some embodiments of the example method, the scaling property comprises a list of one or more scaling components, and each of the scaling components comprises an identifier of the streaming format and a list of values corresponding to the respective set from one or more sets of rescaling weights.

For some embodiments of the example method, each of the one or more sets of rescaling weights corresponds to a respective element of the shapes property.

For some embodiments of the example method, rescaling one or more of the blendshape weights comprises scaling one or more of the blendshape weights using the respective set of rescaling weights.

Some embodiments of the example method may further include obtaining the one or more sets of rescaling weights from an external device.

For some embodiments of the example method, animating the avatar further comprises using the basisMesh property.

For some embodiments of the example method, the basisMesh property comprises a link to a set of mesh data.

Some embodiments of the example method may further include: obtaining a level of detail (LOD) object; parsing the LOD object; parsing each mesh referenced in a list of meshes; parsing each blendshape referenced in a list of blendshapes; parsing each skeleton referenced in a list of skeletons; and parsing each skin referenced in a list of skins.

For some embodiments of the example method, determining the streaming format is supported comprises: searching a face animation list for the streaming format; and determining that the streaming format is in the face animation list.

For some embodiments of the example method, determining the streaming format is supported comprises: searching a list of supported streaming formats for the streaming format; and determining that the streaming format is in the list of supported streaming formats.

For some embodiments of the example method, determining rescaling of one or more of the set of blendshape weights is to be done for the streaming format comprises determining that streaming format is one of a set of keys of a scaling property corresponding to the set of blendshape weights.

For some embodiments of the example method, the set of blendshape weights corresponds to two or more components of an avatar.

An example apparatus in accordance with some embodiments may include: a processor; and a non-transitory computer-readable medium storing instructions operative, when executed by the processor, to cause the apparatus to perform the method of any one of the methods listed above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2A is a schematic illustration showing an example neutral mesh according to some embodiments.
FIG. 2B is a schematic illustration showing an example blendshape with a first example weight according to some embodiments.
FIG. 2C is a schematic illustration showing an example blendshape with a second example weight according to some embodiments.
FIG. 3 is a schematic illustration showing an example set of MPEG ARF main properties according to some embodiments.
FIG. 4 is a flowchart illustrating an example process for parsing of an LOD object according to some embodiments.
FIG. 5 is a flowchart illustrating an example process for parsing a BlendshapeSet object according to some embodiments.
FIG. 6 is a flowchart illustrating an example process for processing blendshape weights according to some embodiments.
FIG. 7 is a flowchart illustrating an example process for rescaling a set of blendshape weights according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

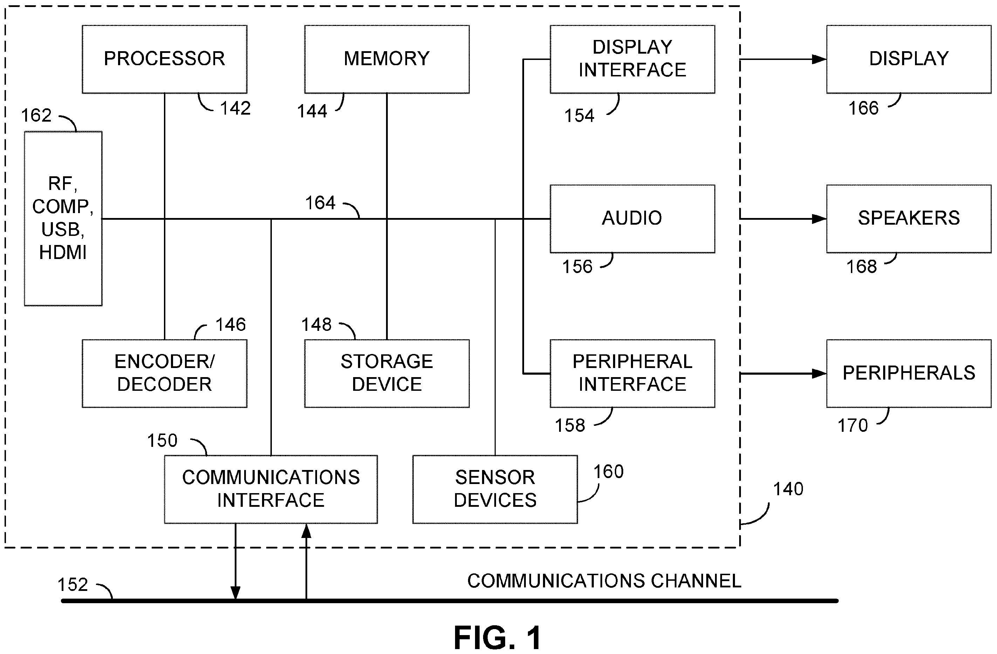

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any eXtended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

This application relates to the encoding of avatar blendshapes retargeting in the MPEG Avatar Representation Format (ARF). If a user sends blendshapes weights to an application to animate its avatar, the straight usage of these weights may introduce changes that are too small or too large. This application introduces signaling that corrects the weights to get a good avatar animation.

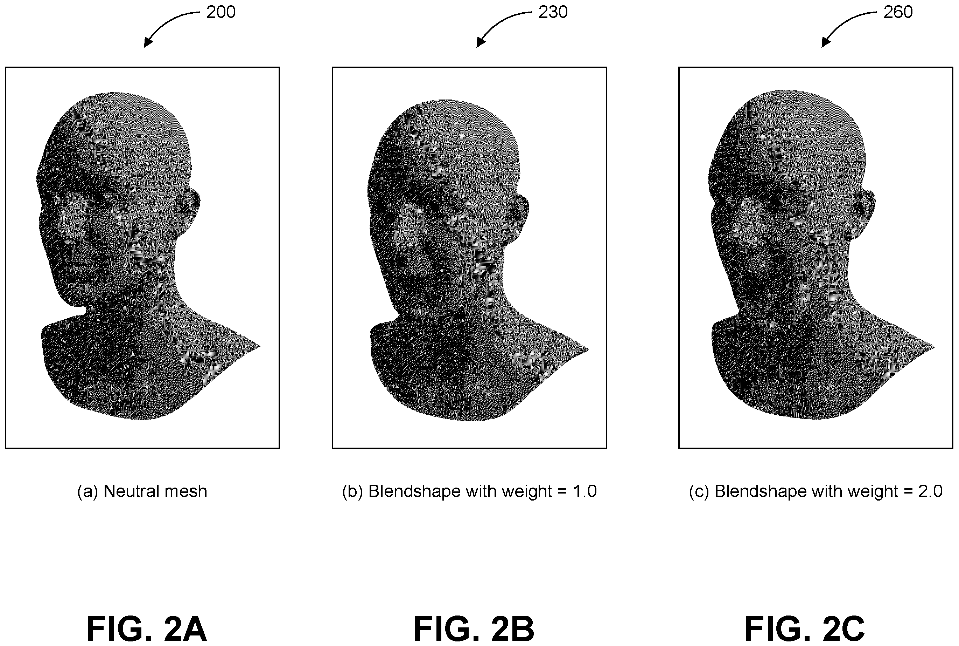

FIG. 2A is a schematic illustration showing an example neutral mesh according to some embodiments. FIG. 2B is a schematic illustration showing an example blendshape with a first example weight according to some embodiments. FIG. 2C is a schematic illustration showing an example blendshape with a second example weight according to some embodiments.

Using current formats like VRML, gITF (with *MPEG_node_avatar_extension*), AJIF, or MPEG ARF, an avatar may be encoded with blendshapes (or morph targets). Given the weight for each blendshape, the avatar may be animated. FIG. 2A shows an example neutral mesh, while FIGs. 2B and 2C show examples of a blendshape with different weights. Stated differently, FIGs. 2A-2C show a blendshape activation with different weights for the example blendshape "JAW_DROP".

FIG. 2A shows the avatar in a neutral state, in which all of the blendshape weights are = 0.0. FIG. 2B shows the avatar with the "JAW_DROP" blendshape activated with a weight of 1.0. The visual result looks correct. FIG. 2C shows the avatar with the same blendshape, but with a weight of 2.0. For FIG. 2C, the result does not look correct because the blendshape has not been made to handle such weights.

The blendshapes weight depends on animation streaming format and on the user themselves. The animation streaming format usually depends on the user capture device. When creating or retargeting the blendshapes of an avatar, the result may not look perfectly as the user's face deformation should. Since retargeting algorithms are not perfect, and the human face is a part of the body where people may perceive micro changes the best, underexaggerated or overexaggerated blendshapes are commonplace. As a result, an avatar's facial deformations (due to blendshapes) often look shifted and slightly different compared to ground truth data.

In some embodiments, users may want to change the intensity of blendshape weights. Such changes may be done to adapt to cultural contexts (such as not smiling too wide or not blinking, among other changes), to stylize an avatar (such as making the avatar look more neutral, for example), or to reduce the perceived emotional intensity.

Blendshapes may be signaled for every combination of capture device and user, but such signaling leads to very large memory consumption. In this application, for some embodiments, generic blendshapes are signaled along with weights specific to each combination of capture device and user.

This application, for some embodiments, is based on the MPEG Avatar Representation Format (ARF) as defined in the MPEG input contribution m69882 and updated with output document N01398, Avatar Representation Format, WG03N01398, MPEG No. 148 (Kemer, Turkey, Nov. 2024).

### MPEG ARF

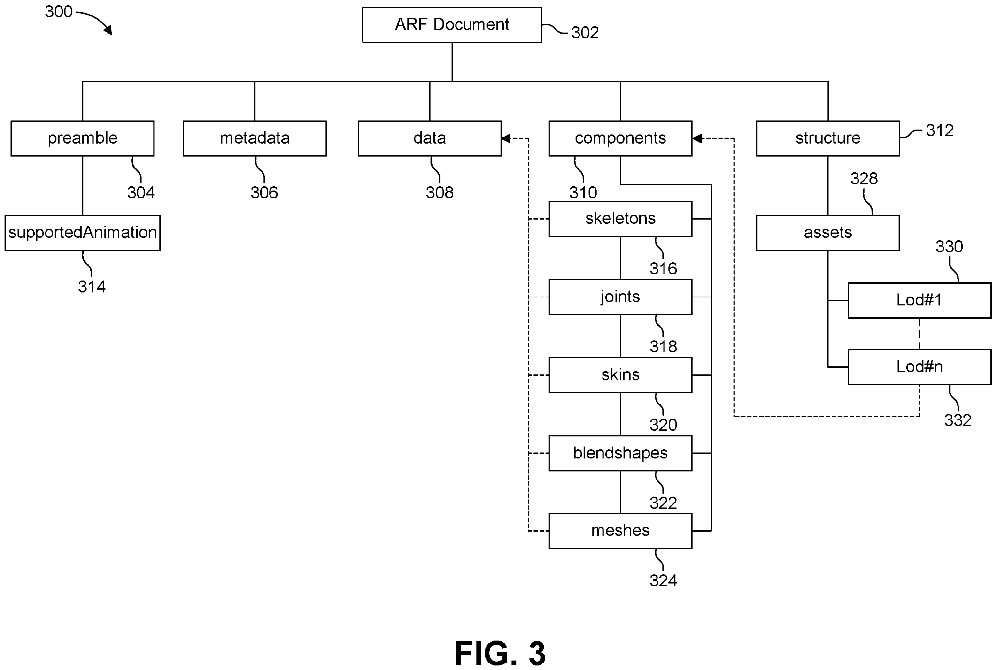

FIG. 3 is a schematic illustration showing an example set of MPEG ARF main properties according to some embodiments. MPEG ARF is based on a set of containers regrouped into categories.

The example structure 300 has an ARF document 302 and several categories of containers hanging off the ARF document.

The "preamble" container 304 is used to uniquely identify the format and characteristics of the file. In particular, the "preamble" container 304 contains a "supportedAnimation" property 314 which lists the streaming animation formats that the file supports.

The "metadata" container 306 contains main information, such as age or gender, of the avatar.

The "data" container 308 contains low-level data, like arrays of values, tensors, or references to external files. Items of the "data" container 308 are referenced by components.

The "components" container 310 contains several component containers (skeletons 316, joints 318, skins 320, blendshapes 322, and meshes 324), which are dedicated to a type of component.

The "structure" container 312 contains the "assets" component 328, which defines the components for an avatar part (body, hand, head, ...) for a level of detail (LOD) 330, 332.

### Signaling a Blendshape Set

Table 1 lists the properties of a blendshapes component.

**Table 1.**

| **Name** | **Type** | **Use** | **Description** |
|---|---|---|---|
| name | string | M | The name of the blendshape set. |
| id | integer | M | A unique identifier of the blendshape set. |
| description | string | O | The description of the blendshape set. |
| purpose | string | O | The purpose of the blendshape set. |
| shapes | array(integer) | M | An array of references to data items that contain each blendshape's data. |
| basisMesh | integer | M | A reference to a data item that contains the basis mesh for this blendshape set. |
| scaling | dict(string => array(number)) | O | A dictionary which maps an animation streaming format to a list of weights. |

The "name" property defines the name of the avatar blendshape set.

The "id" property defines a unique integer for identifying the avatar blendshape set.

The "description" property describes the avatar blendshape set and its usage. This explanation is only illustrative. For example, the "description" property may be used in a user interface to help the user understand for what the blendshape set was intended.

The "purpose" property contains a string that identifies the purpose of the avatar blendshape set. The "purpose" property follows predetermined values, defined by an application or a standard. In some embodiments, the data type of the "purpose" property is an enumeration (enum).

The "shapes" list defines each blendshape of the set.

The "basisMesh" property defines the avatar in a neutral state.

The "scaling" property, introduced by this disclosure, maps each animation streaming format (string URN) to a list of blendshape corrective weights. An example definition of the "scaling" property is shown in Code Listing 1. Code Listing 1 only shows the first three weights in each case.

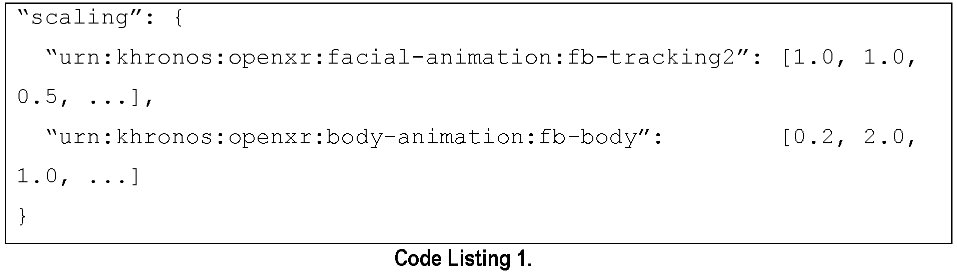

This application adjusts (or corrects) blendshape weights in light of the currently used animation streaming format. For example, suppose the facebook facial animation blendshapes v2 is used (e.g., "urn:khronos:openxr:facial-animation:fb-tracking2" format). For this example, the first blendshape weight may be left unchanged (weight 1.0). The second blendshape weight also may be left unchanged (weight 1.0). The third blendshape weight is divided by 2 (weight 0.5), and so on. Only three weights are shown for this example, but other uses may have many more than 3 weights.

### ARF Schemas Example

This example considers an avatar with four blendshapes, in which the two first ones animate the eyes horizontally and the two last ones animate the eyes vertically. The avatar is assumed to support two streaming animation formats: "urn:example:compagny:eyegaze" and "urn:example:othercompagny:eyegaze". Both formats use four similar blendshapes, but each of the capture devices (owned by the user) sends weights with different dynamics. For instance, the first capture device sends weights that are too high for horizontal eye movements, while the second capture device sends weights that are too high for vertical eye movements.

An example set of avatar assets may have the following structure. A head mesh may have an id = 1001. A blendshape set may use an id = 2001 with four blendshapes. Index 0 with a name of "AU61_Eyes_turn_L" is an animation for eyelids with a movement to the left. Index 1 with a name of "AU61_Eyes_turn_R" is an animation for eyelids with a movement to the right. Index 2 with a name of "AU63_eyeUp" is an animation for eyelids with a movement to the top. Index 3 with a name of "AU63_eyeDown" is an animation for eyelids with a movement to the bottom. This example avatar with example blendshapes may be encoded using the data structure of Code Listing 2.

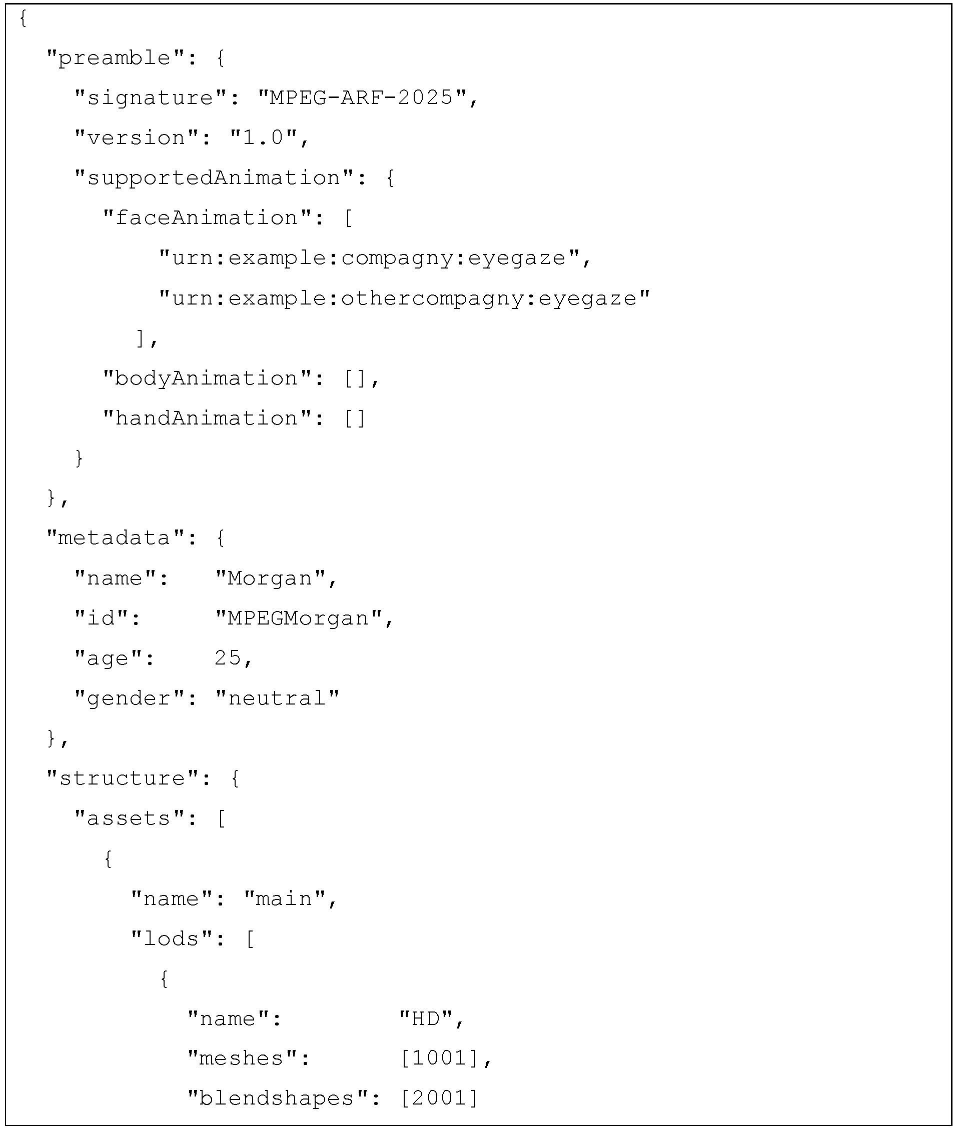

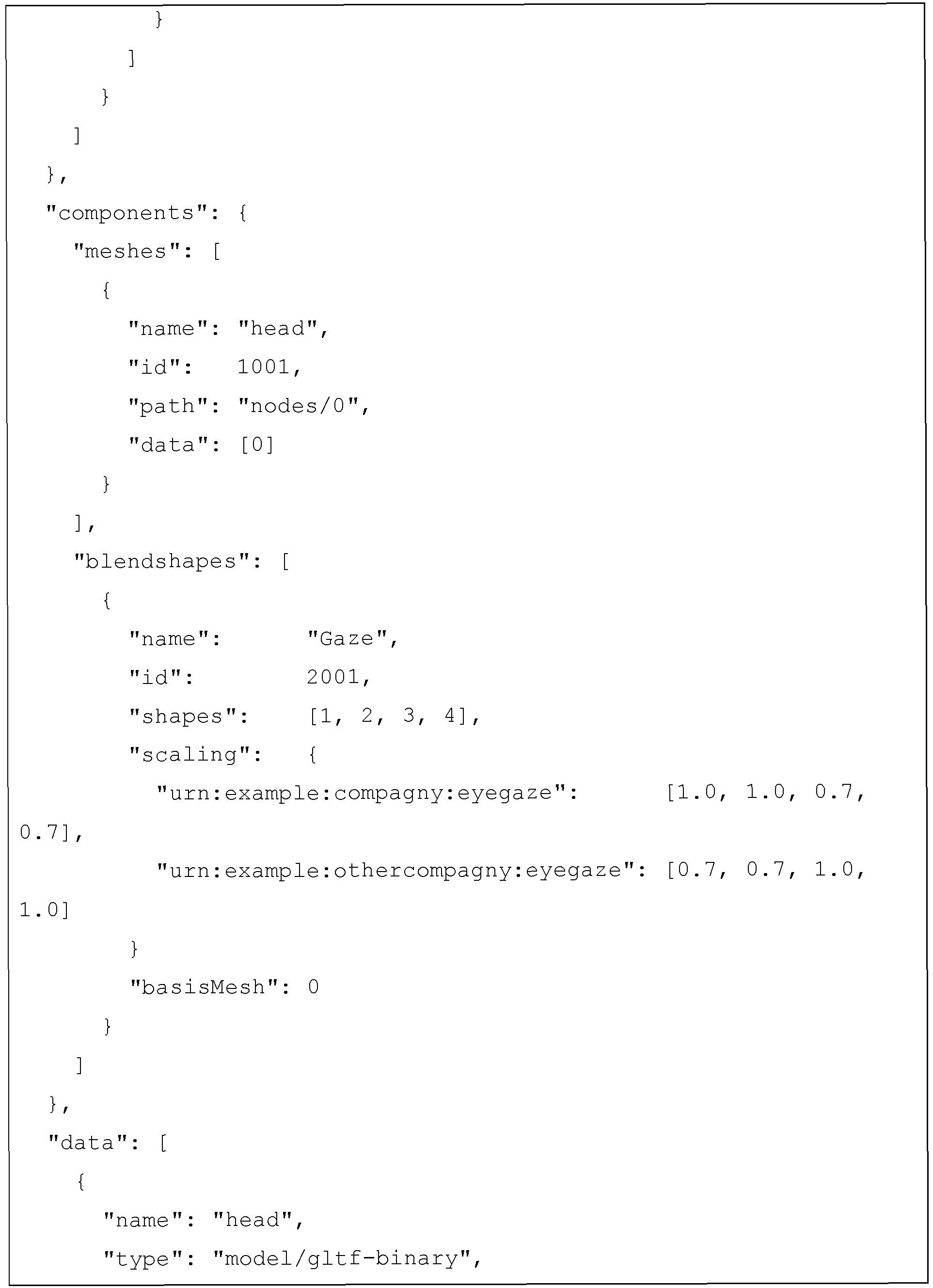

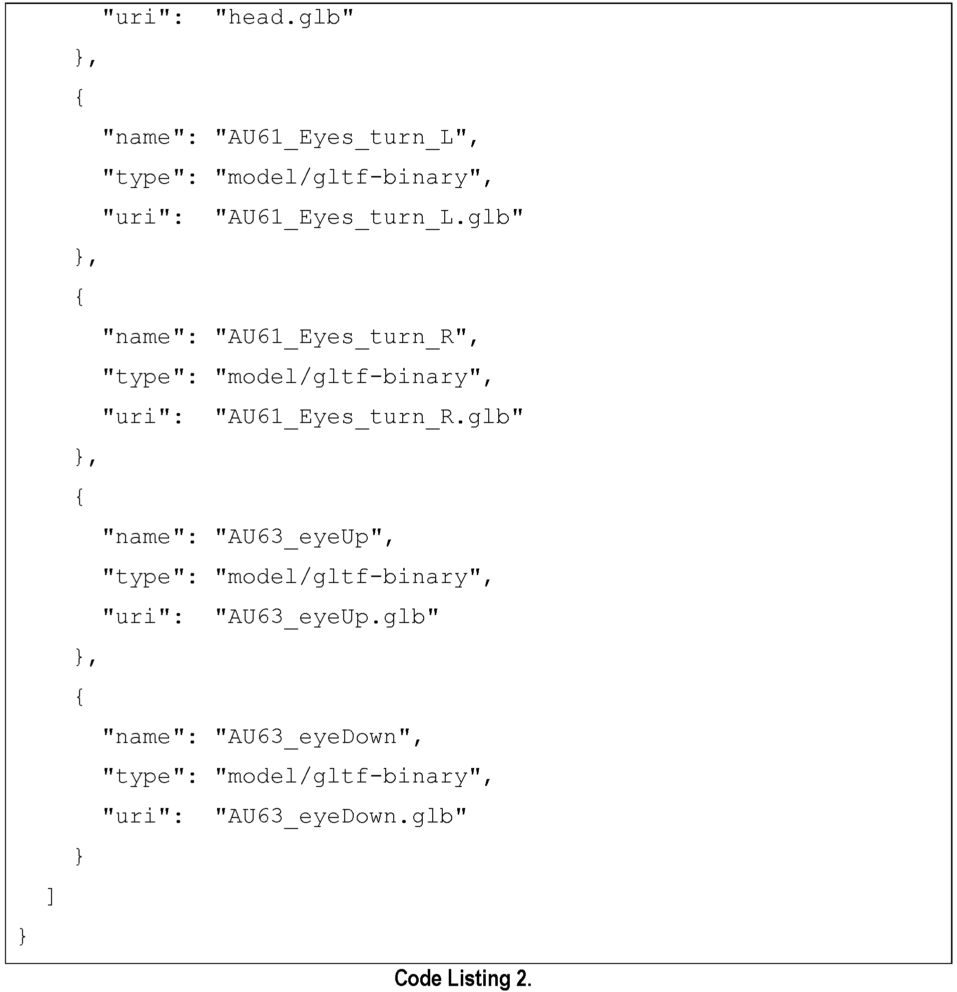

When parsing the "blendshapes" list of the "components" root property as shown in Code Listing 2, a single blendshape set is found. The blendshape set defines four blendshapes and two weight corrections in the "scaling" property.

For animation streaming format "urn:example:compagny:eyegaze", the weights of the two first blendshapes (for horizontal eye movement) are left unchanged with weights of 1.0. The weights of the two last blendshapes (for vertical eye movement) are lowered to be weights equal to 0.7.

For animation streaming format "urn:example:othercompagny:eyegaze", the weights of the two first blendshapes (for horizontal eye movement) are lowered to be weights equal to 0.7. The weights of the two last blendshapes (for vertical eye movement) are left unchanged with weights of 1.0.

### Parse LOD

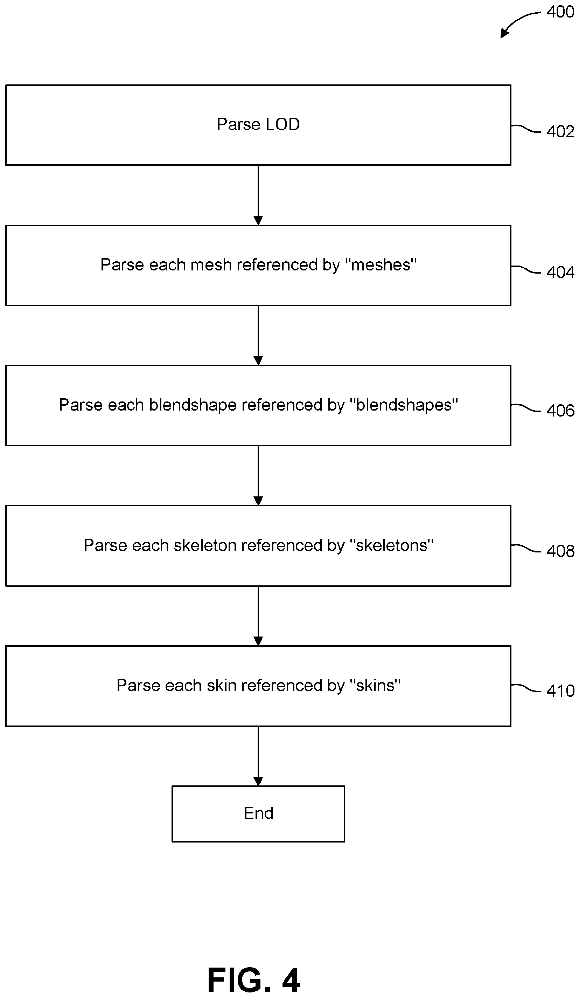

FIG. 4 is a flowchart illustrating an example process for parsing of an LOD object according to some embodiments. FIG. 4 shows an example process 400 for parsing an LOD object. For some embodiments, the LOD object is parsed with the "blendshape" property. The Parse LOD process 402 happens each time an LOD object is processed in the ARF file. Each mesh referenced in the "meshes" list is parsed 404. Each blendshape referenced in the "blendshapes" list is parsed 406. Each skeleton referenced in the "skeletons" list is parsed 408. Each skin referenced in the "skin" list is parsed 410.

### Parse BlendshapeSet

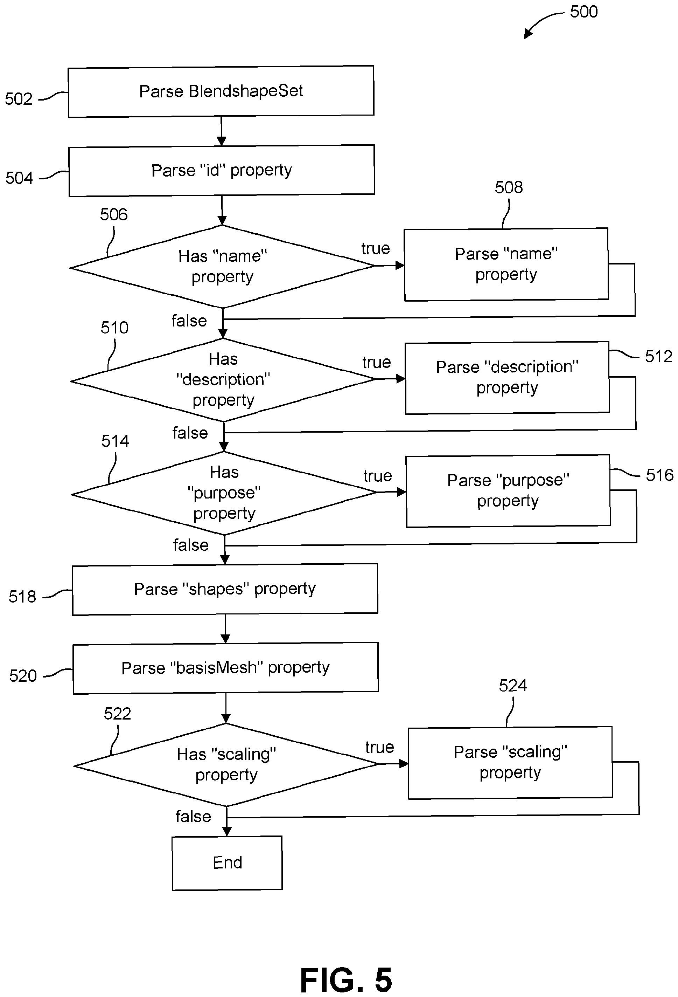

FIG. 5 is a flowchart illustrating an example process for parsing a BlendshapeSet object according to some embodiments. The example process 500 of FIG. 5 shows the parsing of a BlendshapeSet object. The Parse BlendshapeSet process 502 happens each time a BlendshapeSet object is processed in the ARF file. In process box 504, the "id" property is parsed. For some embodiments, the "id" property must be unique, which includes being different from other blendshape sets.

A determination 506 is made regarding whether the "name" property exists. If the answer is yes, then the "name" property is parsed 508. A determination 510 is made regarding whether the "description" property exists. If the answer is yes, then the "description" property is parsed 512. A determination 514 is made regarding whether the "purpose" property exists. If the answer is yes, then the "purpose" property is parsed 516.

The example process 500 continues, and the "shapes" property is parsed 518. For some embodiments, an error is raised if the "shapes" property / list is missing. The example process 500 continues, and the "basisMesh" property is parsed 520. For some embodiments, an error is raised if the "basisMesh" property is missing. A determination 522 is made regarding whether the "scaling" property exists. If the answer is yes, then the "scaling" property is parsed 524. Each key of the "scaling" property must be one of the animation streaming formats defined in the "faceAnimation" list of the "supportedAnimation" property of the "preamble" root property. Each component of the "scaling" property must include a list of numbers in which the size of the list of numbers is equal to the size of the "shapes" list. The example process 500 then exits for some embodiments.

### Blendshape Weights Rescaling

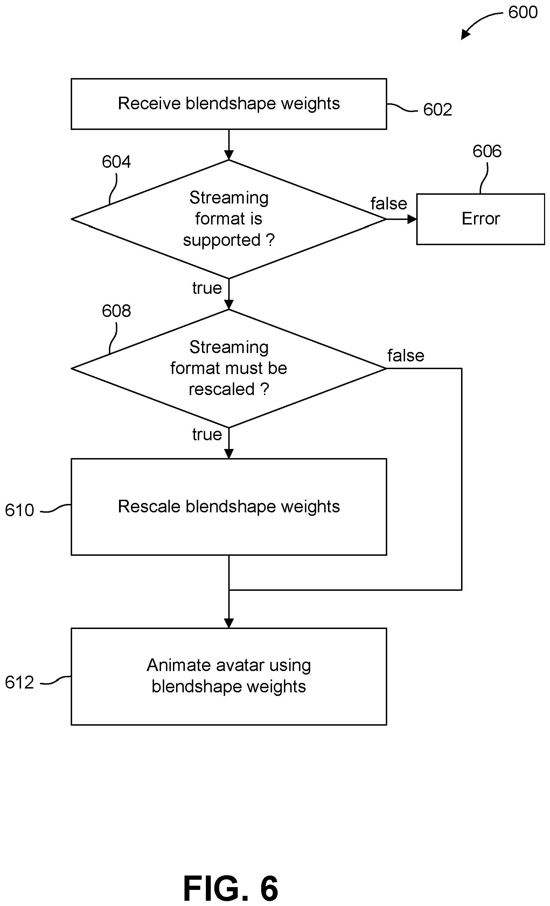

FIG. 6 is a flowchart illustrating an example process for processing blendshape weights according to some embodiments. The example process 600 of FIG. 6 happens every time blendshape weights (*w*₁,...,*wₙ*) are received 602. Blendshape weights may be received from a user capture device or another source.

A determination 604 is made regarding whether the streaming format is supported. If the stream format is not supported, an error is raised 606. The blendshape weights are for a given animation streaming format. For some embodiments, if this format is not in the "faceAnimation" list of the "supportedAnimation" property of the "preamble" root property, the processing fails.

A determination 608 is made regarding whether the streaming format should be rescaled. If the streaming format should be rescaled, then a rescaling of blendshape weights process 610 is performed. If the animation streaming format of the received blendshape weights is one of the keys of the "scaling" property of the corresponding blendshape set, then the corresponding list (*s*₁,...,*sₙ*) in the "scaling" property is used to re-weight the blendshapes weights. The new blendshape weights are (*s*₁*w*₁,...,*sₙwₙ*).

The example process 600 continues, and the blendshape weights (which may have been rescaled) are used to animate 612 the avatar.

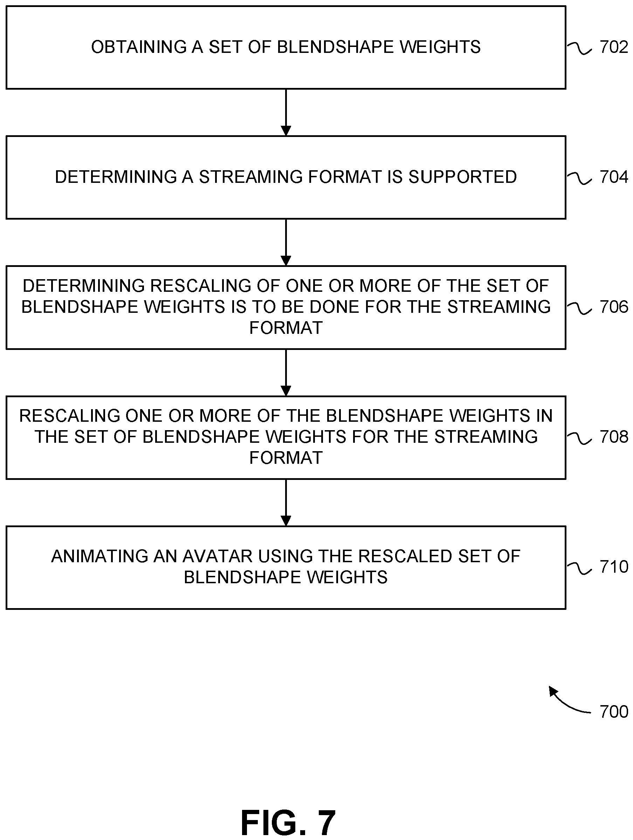

FIG. 7 is a flowchart illustrating an example process for rescaling a set of blendshape weights according to some embodiments. For some embodiments, an example process 700 may include obtaining 702 a set of blendshape weights. For some embodiments, the example process 700 may further include determining 704 a streaming format is supported. For some embodiments, the example process 700 may further include determining 706 rescaling of one or more of the set of blendshape weights is to be done for the streaming format. For some embodiments, the example process 700 may further include rescaling 708 one or more of the blendshape weights in the set of blendshape weights for the streaming format. For some embodiments, the example process 700 may further include animating 710 an avatar using the rescaled set of blendshape weights.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a set of blendshape weights; determining a streaming format is supported; determining rescaling of one or more of the set of blendshape weights is to be done for the streaming format; rescaling one or more of the blendshape weights in the set of blendshape weights for the streaming format; and animating an avatar using the rescaled set of blendshape weights.

Some embodiments of the example method may further include: obtaining a blendshape set object; parsing the blendshape set object; parsing a name property of the blendshape set object; parsing a description property of the blendshape set object; parsing a purpose property of the blendshape set object; parsing a shapes property of the blendshape set object; parsing a basisMesh property of the blendshape set object; and parsing a scaling property of the blendshape set object.

For some embodiments of the example method, the scaling property maps one or more streaming formats to a respective set from one or more sets of rescaling weights.

For some embodiments of the example method, the scaling property comprises a list of one or more scaling components, and each of the scaling components comprises an identifier of the streaming format and a list of values corresponding to the respective set from one or more sets of rescaling weights.

For some embodiments of the example method, each of the one or more sets of rescaling weights corresponds to a respective element of the shapes property.

For some embodiments of the example method, rescaling one or more of the blendshape weights comprises scaling one or more of the blendshape weights using the respective set of rescaling weights.

Some embodiments of the example method may further include obtaining the one or more sets of rescaling weights from an external device.

For some embodiments of the example method, animating the avatar further comprises using the basisMesh property.

For some embodiments of the example method, the basisMesh property comprises a link to a set of mesh data.

Some embodiments of the example method may further include: obtaining a level of detail (LOD) object; parsing the LOD object; parsing each mesh referenced in a list of meshes; parsing each blendshape referenced in a list of blendshapes; parsing each skeleton referenced in a list of skeletons; and parsing each skin referenced in a list of skins.

For some embodiments of the example method, determining the streaming format is supported comprises: searching a face animation list for the streaming format; and determining that the streaming format is in the face animation list.

For some embodiments of the example method, determining the streaming format is supported comprises: searching a list of supported streaming formats for the streaming format; and determining that the streaming format is in the list of supported streaming formats.

For some embodiments of the example method, determining rescaling of one or more of the set of blendshape weights is to be done for the streaming format comprises determining that streaming format is one of a set of keys of a scaling property corresponding to the set of blendshape weights.

For some embodiments of the example method, the set of blendshape weights corresponds to two or more components of an avatar.

An example apparatus in accordance with some embodiments may include: a processor; and a non-transitory computer-readable medium storing instructions operative, when executed by the processor, to cause the apparatus to perform the method of any one of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining a set of blendshape weights;
determining a streaming format is supported;
determining rescaling of one or more of the set of blendshape weights is to be done for the streaming format;
rescaling one or more of the blendshape weights in the set of blendshape weights for the streaming format; and
animating an avatar using the rescaled set of blendshape weights.

2. The method of claim 1, further comprising:
obtaining a blendshape set object;
parsing the blendshape set object;
parsing a name property of the blendshape set object;
parsing a description property of the blendshape set object;
parsing a purpose property of the blendshape set object;
parsing a shapes property of the blendshape set object;
parsing a basisMesh property of the blendshape set object; and
parsing a scaling property of the blendshape set object.

3. The method of claim 2, wherein the scaling property maps one or more streaming formats to a respective set from one or more sets of rescaling weights.

4. The method of claim 3,
wherein the scaling property comprises a list of one or more scaling components, and
wherein each of the scaling components comprises an identifier of the streaming format and a list of values corresponding to the respective set from one or more sets of rescaling weights.

5. The method of any one of claims 3-4, wherein each of the one or more sets of rescaling weights corresponds to a respective element of the shapes property.

6. The method of any one of claims 3-5, wherein rescaling one or more of the blendshape weights comprises scaling one or more of the blendshape weights using the respective set of rescaling weights.

7. The method of any one of claims 3-5, further comprising obtaining the one or more sets of rescaling weights from an external device.

8. The method of any one of claims 2-7, wherein animating the avatar further comprises using the basisMesh property.

9. The method of any one of claims 2-8, wherein the basisMesh property comprises a link to a set of mesh data.

10. The method of any one of claims 1-9, further comprising:
obtaining a level of detail (LOD) object;
parsing the LOD object;
parsing each mesh referenced in a list of meshes;
parsing each blendshape referenced in a list of blendshapes;
parsing each skeleton referenced in a list of skeletons; and
parsing each skin referenced in a list of skins.

11. The method of any one of claims 1-10, wherein determining the streaming format is supported comprises:
searching a face animation list for the streaming format; and
determining that the streaming format is in the face animation list.

12. The method of any one of claims 1-11, wherein determining the streaming format is supported comprises:
searching a list of supported streaming formats for the streaming format; and
determining that the streaming format is in the list of supported streaming formats.

13. The method of any one of claims 1-12, wherein determining rescaling of one or more of the set of blendshape weights is to be done for the streaming format comprises determining that streaming format is one of a set of keys of a scaling property corresponding to the set of blendshape weights.

14. The method of any one of claims 1-13, wherein the set of blendshape weights corresponds to two or more components of an avatar.

15. An apparatus comprising:
a processor; and
a non-transitory computer-readable medium storing instructions operative, when executed by the processor, to cause the apparatus to perform the method of any one of claims 1 through 14.
